# EUROPÄISCHE PATENTSCHRIFT

(11) **EP 3 297 891 B1**
(45) Veröffentlichungstag und Bekanntmachung des Hinweises auf die Patenterteilung: **22.05.2019**
(21) Anmeldenummer: 16715517.5
(22) Anmeldetag: 08.04.2016
(51) Int. Cl.: B62D 21/11

(54) **KRAFTFAHRZEUG MIT EINEM ACHSTRÄGER**
MOTOR VEHICLE HAVING AN AXLE CARRIER
VÉHICULE AUTOMOBILE MUNI D'UN SUPPORT D'ESSIEU

(30) Priorität: 18.05.2015 DE 102015209031; 25.11.2015 DE 102015223280
(43) Veröffentlichungstag der Anmeldung: 28.03.2018
(73) Patentinhaber: Bayerische Motoren Werke Aktiengesellschaft, 80809 München (DE)
(72) Erfinder: STENZENBERGER, Alfred, 86681 Fuenfstetten (DE); DE BIASI, Christian, 80937 München (DE); THAMM, Eduardo, 81547 München (DE)
(86) Internationale Anmeldenummer: PCT/EP2016/057705
(87) Internationale Veröffentlichungsnummer: WO 2016/184607

(56) Entgegenhaltungen:
- US-A1- 2014 117 654

## Beschreibung

Die Erfindung betrifft ein Kraftfahrzeug mit einem Achsträger, wobei der Achsträger zumindest zwei zumindest annähernd in Fahrzeug-Längsrichtung orientierte Längsträger und zumindest einen diese verbindenden Querträger umfasst, die eine erste Baueinheit beschreiben und wobei der Achsträger neben einer zumindest teilweise gelenkigen Abstützung für radführende Lenker zur Aufnahme einer elektromotorischen Antriebseinheit für das Fahrzeug vorgesehen ist. Zum Stand der Technik wird beispielshalber auf die DE 10 2005 049 947 A1 verwiesen, die einen heute üblichen und dort als Fahrschemel bezeichneten Hinterachsträger zeigt, während in der weiterhin beispielhaft genannten DE 10 2011 081 836 A1 ein Vorschlag für die Gestaltung einer elektrisch angetriebenen Achse bzw. eines im Hinblick hierauf in besonderer Weise gestalteten Achsträgers gezeigt ist.

Insbesondere bei Personenkraftwagen, welche bislang praktisch durchwegs verbrennungsmotorisch angetrieben sind, wirkt sich der Trend zur Elektrifizierung, d.h. hin zu einem (ggf. auch) elektromotorischen Antrieb signifikant auf die konstruktive Gestaltung des Fahrwerkbereichs der Kraftfahrzeuge aus. Besonders betroffen sind von dieser Weiterentwicklung die bei PKWs aus Fertigungs- und Komfortgründen weit verbreiteten Achsträger, und anderem deshalb, weil eine im Bereich des Achsträgers bzw. eines Hinterachsträgers eines mit Hinterradantrieb ausgerüsteten PKWs vorzusehende elektromotorische Antriebseinheit erheblich mehr Bauraum benötigt als ein bislang dort (nur) vorgesehenes Hinterachsgetriebe. Daneben sind auch Fahrzeugachsen von der genannten Weiterentwicklung betroffen, nämlich beispielsweise die Anordnung von deren radführenden Lenkern.

Die US 2014/0117654 A1 offenbart eine Achsträger gemäß dem Oberbegriff des Anspruchs 1. Daher soll ein Kraftfahrzeug mit einem günstigen Achsträger nach dem Oberbegriff des Anspruchs 1 aufgezeigt werden (= Aufgabe der vorliegenden Erfindung).

Die Lösung dieser Aufgabe ist dadurch gekennzeichnet, dass zusätzlich zu den die erste Baueinheit beschreibenden Trägern eines Fahrzeuges mit einem Achsträger zwei weitere Längsträger und zumindest ein weiterer diese weiteren Längsträger verbindender Querträger vorgesehen sind, die eine zweite Baueinheit beschreiben, welche im Einbauzustand des Achsträgers in einem horizontal stehenden Fahrzeug in Vertikalrichtung betrachtet unterhalb oder oberhalb der ersten Baueinheit liegt und mit der ersten Baueinheit lösbar verbunden ist und wobei an jeder Baueinheit auf jeder Fahrzeug-Seite zumindest einer der mehreren vorgesehenen radführenden Lenker zumindest teilweise gelenkig abgestützt ist. Vorteilhafte Aus- und Weiterbildungen sind Inhalt der Unteransprüche.

Vorgeschlagen ist ein Kraftfahrzeug mit einem Achsträger (insbesondere als Hinterachsträger eines Personenkraftwagens eingesetzt), welcher quasi in Horizontalebene geteilt ist, und der es auf besonders effiziente Weise ermöglicht, innerhalb des einen Rahmen bildenden Achsträgers eine elektromotorische Antriebseinheit für das Fahrzeug anzuordnen und gleichzeitig mehrere radführende Lenker des zweispurigen Fahrzeugs in fahrdynamisch günstiger Weise (hinsichtlich der Kinematik und Elastokinematik der Lenker bzw. der durch diese geführten Räder) zumindest teilweise gelenkig am Achsträger des zweispurigen Fahrzeugs anzubinden. Im Rahmen einer automatisierten Montage kann dann nämlich zunächst die untere der beiden Achsträger-Baueinheiten auf einen in der Fließband-Montage vorgesehenen Werkzeugträger aufgesetzt werden und danach die vormontierte elektromotorische Antriebseinheit auf den Werkzeugträger aufgesetzt werden, welcher danach zur nächsten Montagestation fährt, an der beispielsweise die von der Antriebseinheit wegführenden beidseitigen Abtriebswellen inclusive der Radträger montiert werden, woraufhin in einer nächsten Montagestation die obere Baueinheit des Achsträgers aufgesetzt wird. Im nächsten Montageschritt können dann die radführenden Lenker angebaut (und - so noch nicht erfolgt - mit den Radträgern verbunden) werden, woraufhin dieser Werkzeugträger von unten her an eine Karosserie herangeführt wird, so dass dann die am Werkzeugträger vormontierte Achse im Rahmen der sog. und dem Fachmann für die Fertigung von Personenkraftwagen bekannten "Hochzeit" (siehe hierzu bspw. die DE 10 2010 055 941 A) mit der Fahrzeugkarosserie verschraubt werden kann.

Wenn die elektromotorische Antriebseinheit über zumindest drei durch elastische Gummilager gebildete Lagerstellen im Achsträger gelagert ist, die - wie üblich zylindrische Buchsen mit zwischenliegender Elastomerschicht aufweisend - solchermaßen angeordnet sind, dass die Zylinderachsen zumindest zweier Gummilager in einer vertikalen Projektion (auf die Fahrbahn, auf dem das Kraftfahrzeug mit eingebautem Achsträger steht) zumindest näherungsweise senkrecht aufeinander stehen, so ist damit zum einen das an die Räder zu übertragende Drehmoment der elektromotorischen Antriebseinheit bereits vollumfänglich abgestützt - eine weitere Drehmoment-Stütze ist dann nicht erforderlich. Weiterhin ist damit kein Anschlag für die bei Gummilagern üblicherweise etwas größere Bewegungsfreiheit in deren Zylinderachsrichtung erforderlich. Üblicherweise sind bei herkömmlichen PKW-Hinterachsträgern daran gelagerte Hinterachsgetriebe nämlich nur über drei Gummilager gelagert, deren Achsen sich in Fzg.-Längsrichtung erstrecken. Für eine vorliegend zu lagernde elektromotorische Antriebseinheit ist letzteres jedoch auch wegen der relativen großen Masse der Antriebseinheit nicht ausreichend bzw. es wären bei Übernahme des Lagerungskonzepts von Hinterachsgetrieben zumindest in Fzg.-Längsrichtung betrachtet noch definierte Bewegungsanschläge erforderlich. Solche Anschläge sind mit der beanspruchten und oben beschriebenen Lager-Anordnung (mit den aufeinander senkrecht stehenden Zylinderachsen der Gummilager) nicht erforderlich. Besonders effizient ist diese (erfindungsgemäße) Abstützung dann, wenn die Zylinderachsen zweier Gummilager oder allgemein elastischer Lager in Fahrzeug-Querrichtung (und somit zumindest annähernd parallel zu den bereits genannten Abtriebswellen) verlaufen und (einer symmetrischen Abstützung wegen) vorzugsweise zwei weitere solcher Lager mit ihren Zylinderachsen im wesentlichen in Längsrichtung des Fahrzeugs ausgerichtet sind. Für die in Fzg.-Querrichtung verlaufenden Gummilager-Zylinderachsen ist jeweils eine Lagerstelle in einem der Querträger der ersten Baueinheit vorgesehen und zwar vorzugsweise derart, dass die besagten Zylinderachsen zusammenfallen.

Wie bereits erwähnt ist die elektromotorische Antriebseinheit im Achsträger einer Achse aufgehängt. Hierfür wird vorgeschlagen, an zwei Längsträgern der oberen Achsträger-Baueinheit je eine Lagerstelle für das Antriebsaggregat vorzusehen und an einem diese Längsträger verbindenden Querträger der oberen Achsträger-Baueinheit zwei Lagerstellen für das Antriebsaggregat vorzusehen. Diese Lagerstellen sind vorzugsweise als (für den Servicefall) austauschbare Lagerbuchsen ausgebildet, welche in geeignete Aufnahmen im oder am jeweiligen Trägerteil des Achsträgers bzw. der Achsträger-Baueinheit eingesetzt sind.
Ebenfalls im Hinblick auf technisch und wirtschaftliche günstige Fertigungsverfahren wird vorgeschlagen, dass die erste Baueinheit aus die Längsträger bildenden Guss-Seitenteilen und zwei in Form von Strangpressprofilen ausgebildeten Querträgern zusammengesetzt ist, während die zweite Baueinheit ein Druckgussbauteil ist. Dabei können die genannten Strangpressprofile in geeignete Aufnahmen der Längsträger der ersten Baueinheit eingesteckt sein. Für die lösbare Verbindung letzterer mit der zweiten Baueinheit werden vorzugsweise mehrere Schraubverbindungen vorgeschlagen. Die lösbare Verbindung der beiden Baueinheiten ist solchermaßen gestaltet und es sind die beiden Baueinheiten solchermaßen gegeneinander abgestützt, dass die am Achsträger betriebsgemäß auftretenden Lasten von den beiden Baueinheiten gesamthaft aufgenommen werden. Damit kann bspw. die erste Baueinheit für sich alleine betrachtet schwächer dimensioniert sein als bei einem vergleichbaren und nur aus dieser ersten Baueinheit bestehenden Achsträger.

Darüber hinaus kann an der genannten zweiten Baueinheit zumindest ein radführender Lenker abgestützt sein; weitere radführende Lenker sind bauraumgünstig vorzugsweise an der oberen Baueinheit abgestützt. Insbesondere handelt sich bei einem "oberen" Lenker um einen oberen Dreieckslenker je Fahrzeugseite, da ein solcher vorteilhaft hinsichtlich Bauraumbedarf und Gewicht ist. Wenn weiterhin ein Quer-Stabilisator ebenfalls beispielsweise an der oberen Baueinheit gelagert ist, wobei dessen seitliche und wie üblich zumindest annähernd in Fzg.-Längsrichtung abgewinkelten Stabilisator-Arme einfach über diesen Dreieckslenker relativ weit außen liegend und somit dort, wo dessen Abmessung in Fzg.-Längsrichtung relativ gering ist, über den jeweiligen Dreieckslenker hinweg geführt sind, ist für die elektromotorische Antriebseinheit sowie für die zweite untere Achsträger-Baueinheit ausreichender Bauraum vorhanden. Dabei kann der Stabilisator, insbesondere wenn es sich um einen geteilten Stabilisator mit integriertem Aktuator zur Erzeugung eines Wankstabilisierungsmomentes handelt, bauraumbedarfsgünstig im vorderen Bereich (in Fzg.-Fahrtrichtung betrachtet) angeordnet sein, während Spurlenker zur Führung oder sogar mittels eines Aktuators veränderbarer Einstellung der Spur der Räder der Achse zur Erzielung einer vorteilhaften relativ großen Länge im hinteren Bereich des Achsträgers angeordnet sein können. Der Aktuator zur Spureinstellung, d.h. ein Lenkgetriebe für die Räder dieser Achse kann dabei solchermaßen ausgebildet und angeordnet sein, dass er zur Steifigkeitserhöhung des Achsträgers beiträgt. Hierfür besitzt er ein sog. mittragendes Gehäuse, welches sowohl mit der ersten als auch mit der zweiten Baueinheit des Achsträgers lösbar verbunden ist. Falls in einer Fahrzeug-Variante, welche mit einer erfindungsgemäßen Hinterachse ausgerüstet ist, kein Lenkgetriebe verbaut werden soll, so kann anstelle dessen Gehäuses ein dessen Tragfunktion übernehmendes Verstrebungs-Bauteil vorgesehen sein. Weiterhin vorgeschlagen wird, den besagten Dreieckslenker mittels zweier Gummilager gelenkig am Achsträger anzubinden, während für die dritte Anbindungsstelle am Radträger ein Kugelgelenk vorgeschlagen wird, insbesondere um die Lenkkräfte für das vorstehend genannte Lenkgetriebe so gering als möglich zu halten. Was die genannten Gummilager betrifft, so stellen sich besonders günstige elastokinematische Verhältnisse dann ein, wenn eines dieser Gummilager in einer senkrechten Projektion auf die Fahrbahn vor und das andere hinter Radmitte liegt und wenn die Mittelachse zumindest eines der Gummilager in dieser Projektion unter einem Winkel im Bereich zwischen 0° und 20° gegenüber der Fahrzeuglängsachse geneigt ist, wobei in Fahrtrichtung betrachtet die Mittelachse des vorderen Gummilagers um einen größeren Winkelbetrag zur Fahrzeug-Außenseite hin weist als die gegebenenfalls zur Fahrzeug-Mittenebene hin gerichtete Mittelachse des hinteren Gummilagers.

Weiter oben wurde bereits erwähnt, dass auch an der unteren Achsträger-Baueinheit zumindest ein radführender Lenker (je Fzg.-Rad) abgestützt sein kann, bei welchem es sich dann vorrangig um einen insbesondere bei Vorliegen höherer Seitenführungskräfte doch relativ hohe Kräfte übertragenden sog. Sturz-Lenker handeln kann. Im Hinblick auf eine auch unter solchen Umständen möglichst exakte Radführung wird vorgeschlagen, eine in Fzg.-Querrichtung verlaufende Querbrücke der unteren zweiten Baueinheit nahe der Anbindung des Sturzlenkers vorzusehen. Im Hinblick auf den Bauraumbedarf der elektromotorischen Antriebseinheit, welche üblicherweise einen leistungsstarken (und daher relativ großvolumigen) Elektromotor sowie ein Getriebe aufweist, welches zumindest die Funktion eines Differentials zwischen den beiden angetriebenen Fzg.-Rädern übernimmt, kann diese Querbrücke zumindest in einer senkrechten Projektion auf die Fahrbahn betrachtet, jedoch auch bei tatsächlicher Betrachtung, zwischen einem in Vertikalrichtung betrachtet untersten Teilbereich des mit seiner Rotationsachse in Fzg.-Querrichtung verbauten Elektromotors und dem in Fahrtrichtung betrachtet neben diesem angeordneten Getriebe der Antriebseinheit, von welchem Abtriebswellen in Fzg.-Querrichtung zu den Rädern des Fahrzeugs führen, angeordnet sein.

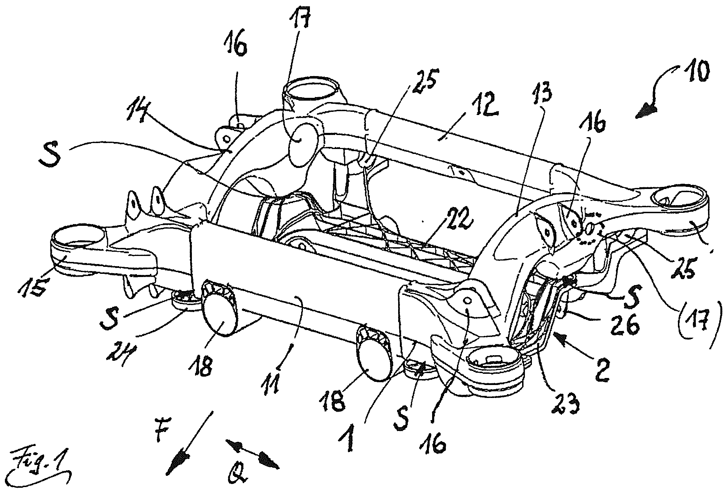

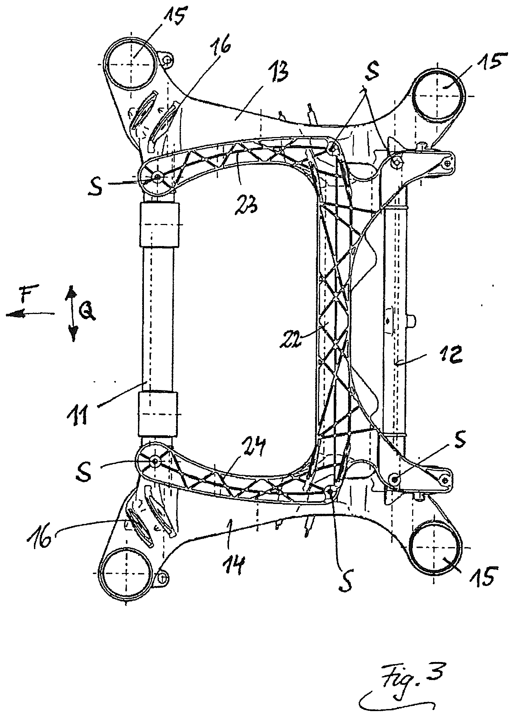

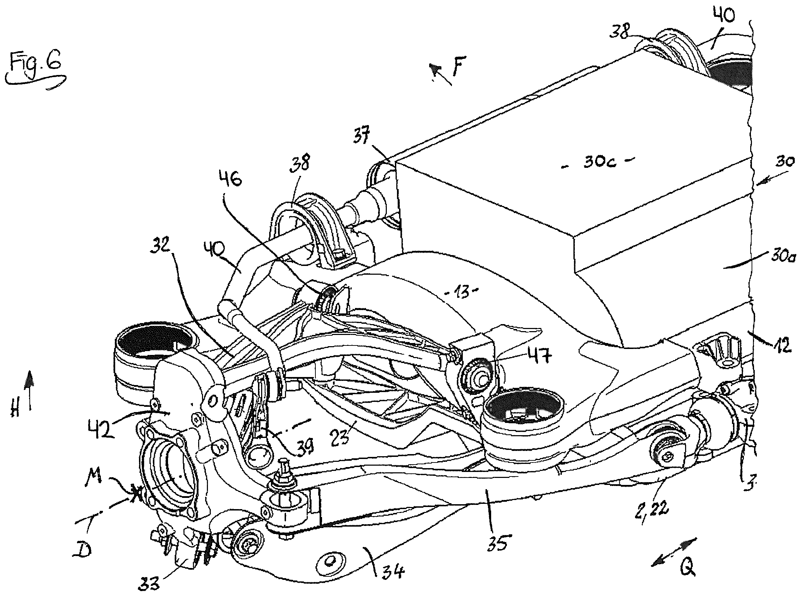

Die beigefügten Figuren zeigen zwei Ausführungsbeispiele der Erfindung und es sei darauf hingewiesen, dass jedes näher beschriebene Merkmal erfindungswesentlich sein kann, aber nicht sein muss. Dabei zeigen Figuren 1 - 5 ein erstes Ausführungsbeispiel der Erfindung und Figuren 6 - 11 ein zweites Ausführungsbeispiel der Erfindung.

Im ersten Ausführungsbeispiel zeigt Figur 1 eine isometrische Ansicht des Achsträgers von schräg vorne oben, Figur 2 eine isometrische Ansicht des Achsträgers von schräg hinten, Figur 3 die Ansicht des Achsträgers von unten (in Vertikalrichtung), Figur 4 einen Zwischenschritt im Montageprozess des Achsträgers mit Anbauteilen und Figur 5 den komplettierten Achsträger mit Anbauteilen, so wie dieser im Zuge der sog. Hochzeit am Unterboden einer Karosserie bzw. des Aufbaus eines Personenkraftwagens montiert wird.

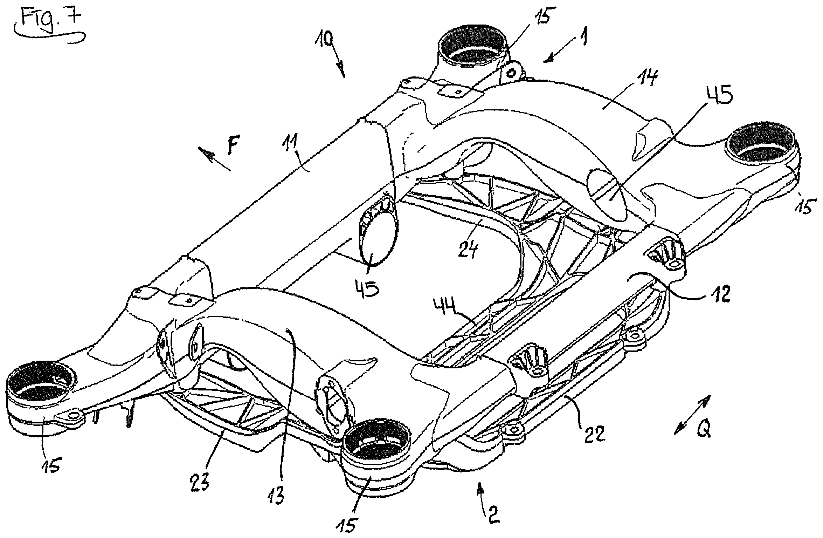

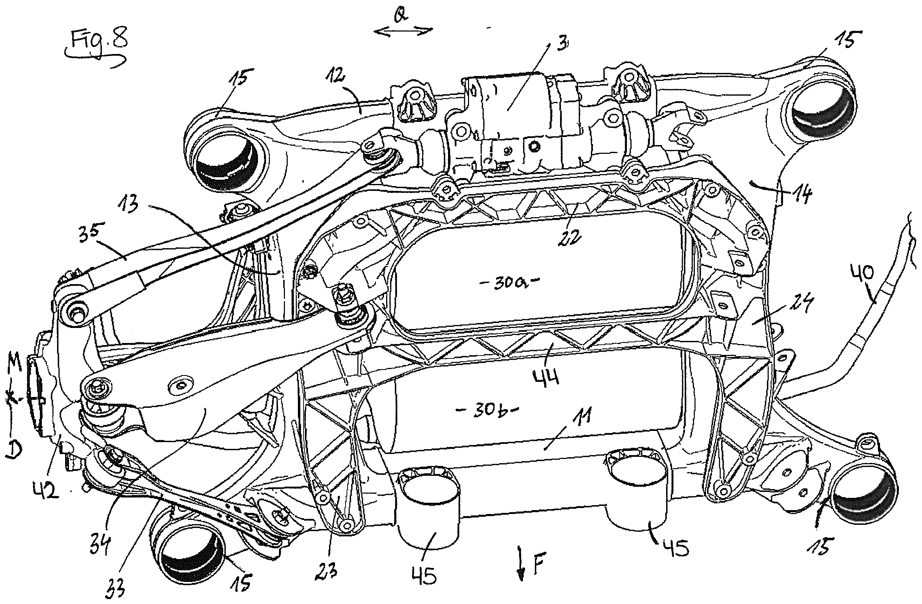

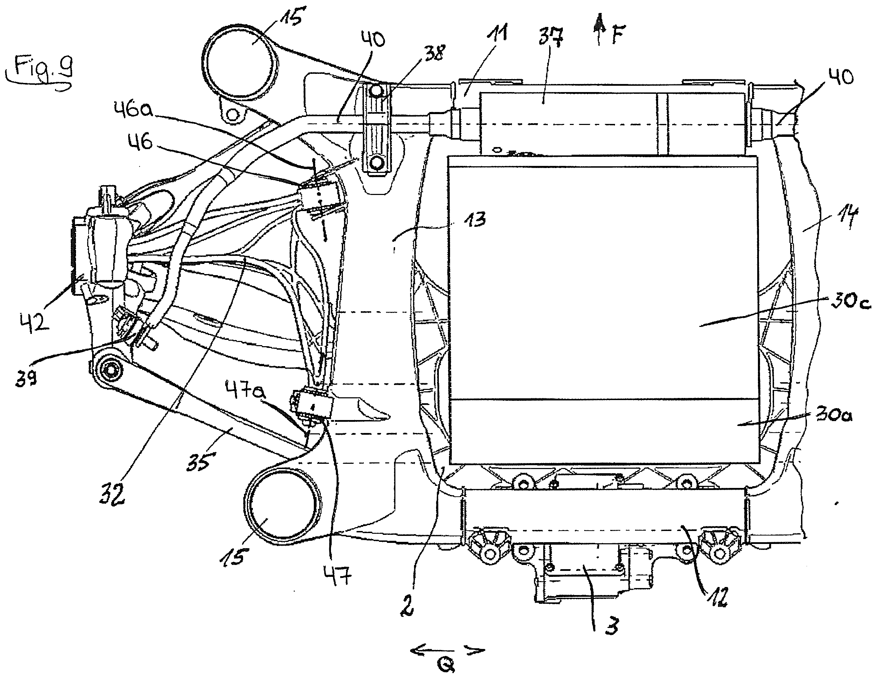

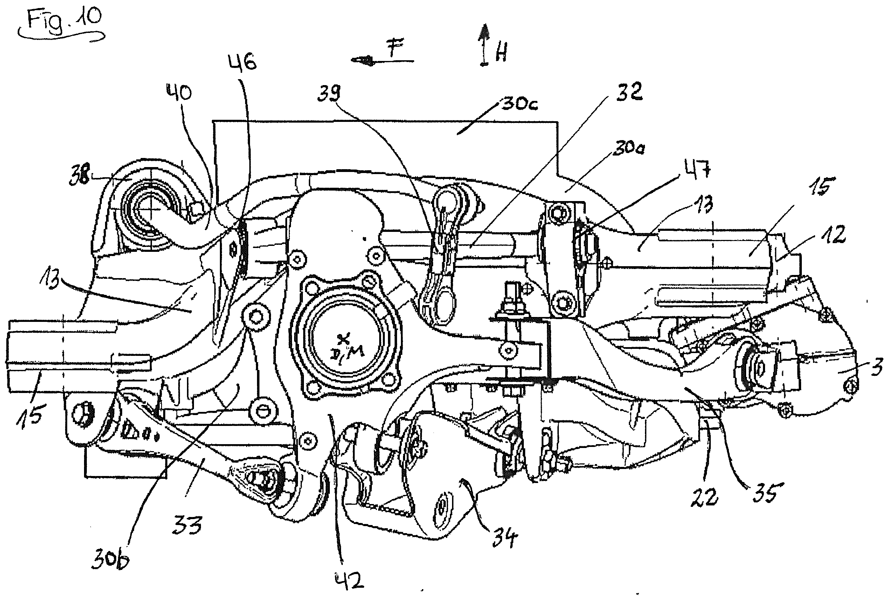

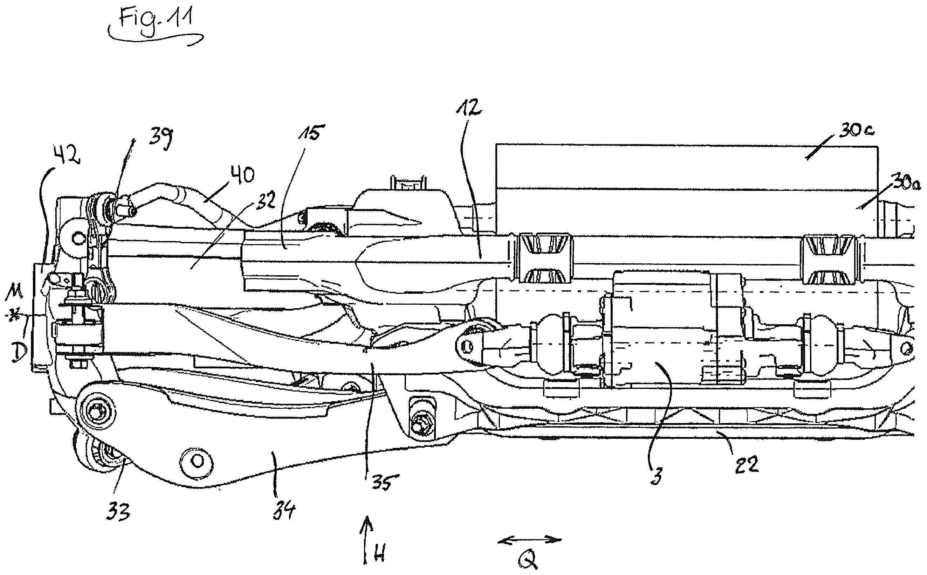

Figur 6 - 11 zeigen ein zweites Ausführungsbeispiel der Erfindung in perspektivischer Darstellung (Fig.6; Fig.7: nur Achsträger), in perspektiver Ansicht von unten (Fig.8) sowie in Teil-Aufsicht von oben (Fig.9), in Seitenansicht (Fig.10) und in Teil-Ansicht von hinten (Fig.11). Ein Pfeil F verdeutlicht dabei die Fahrtrichtung des Fahrzeugs (und damit auch dessen Längsachse), während die Fahrzeug-Querrichtung durch einen Doppelpfeil Q und die Vertikalrichtung durch einen nach oben weisenden Pfeil H (für die Hochachse) dargestellt ist.

Zunächst auf die **Figuren 1 - 3** Bezug nehmend ist mit der Bezugsziffer 1 eine erste Baueinheit und mit der Bezugsziffer 2 eine zweite Baueinheit gekennzeichnet, die zusammengesetzt - wie in **Fig.1** dargestellt - einen erfindungsgemäßen Achsträger 10 bilden. Ein in Fahrtrichtung F des mit diesem Achsträger 10 ausgestatteten Fahrzeugs vorderer und in Fahrzeug-Querrichtung Q orientierter Querträger 11 ist ebenso wie ein zu diesem parallel weiter hinten vorgesehenen Querträger 12 als Strangpressprofil ausgebildet und beiderseits endseitig stoffschlüssig und auch formschlüssig mit jeweils einem in Fahrtrichtung F ausgerichteten Längsträger 13 (in Fahrtrichtung betrachtet links liegend) bzw. 14 (in Fahrtrichtung betrachtet rechts liegend) verbunden. An den Enden dieser in Druckguss ausgeführten Längsträger 13, 14 sind Aufnahmen 15 für nicht dargestellte elastische Lager vorgesehen, über die der Achsträger 10 am Unterboden des (nicht gezeigten) Aufbaus eines Personenkraftwagens lösbar befestigt wird bzw. ist. Die Querträger 11 und 12 sowie die Längsträger 13 und 14 mit den Aufnahmen 15 sind miteinander zusammenhängend Bestandteile der ersten Baueinheit 1.

Im Einbauzustand im Fahrzeug in Vertikalrichtung betrachtet unterhalb der Baueinheit 1 ist eine zweite Baueinheit 2 vorgesehen, welche mit erstgenannter an mehreren Stellen S, von denen hier nur einige sichtbar sind, von unten her verschraubt ist, und die durch einen vertikal unterhalb in der Nähe des Querträgers 12 liegenden Querträger 22 sowie zwei vertikal im wesentlich direkt unterhalb der Längsträger 13, 14 liegende Längsträger 23, 24 gebildet ist, welche Längsträger 23, 24 über den Querträger 22 miteinander verbunden sind, wobei diese zweite Baueinheit 2 als ein (in sich zusammenhängendes) Druckgussbauteil ausgebildet ist.

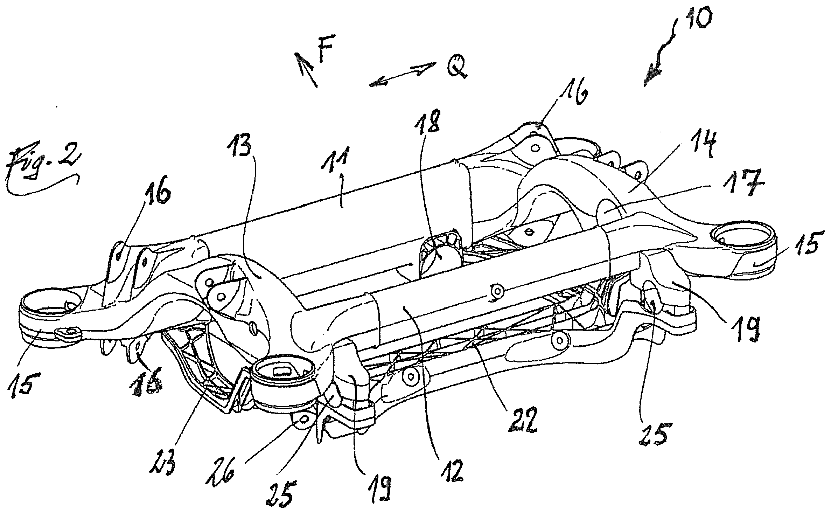

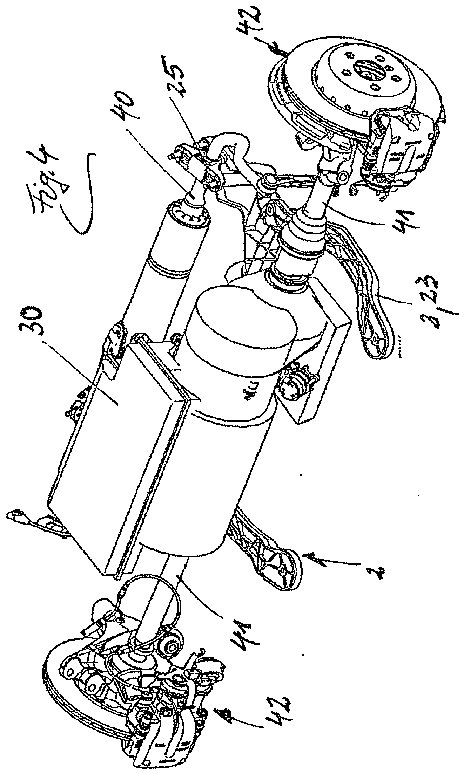

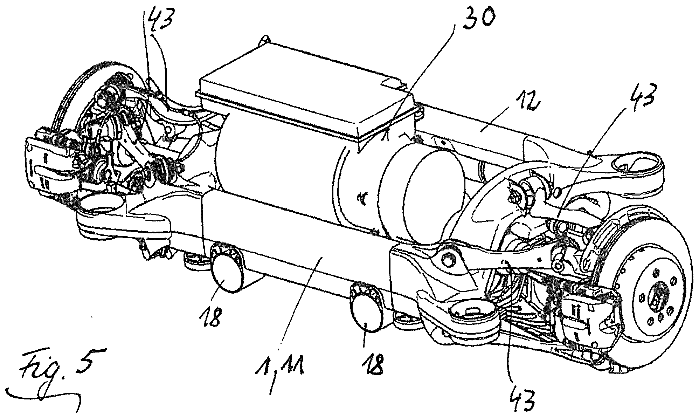

An den Längsträgern 13, 14 sind mehrere Anlenk-Laschen 16 zur Aufnahme jeweils eines Gummilagers für einen radführenden Lenker (vgl. die später erläuterte Fig.5) vorgesehen und weitere solche Anlenk-Laschen 26 befinden sich an den Längsträgern 23, 24. In letzteren ist in deren hinterem Endbereich jeweils eine zunächst nach oben offene (halbkreis-zylindrische) Aufnahme 25 für ein Lager eines nur in Fig.4 sichtbaren Quer-Stabilisators (40) vorgesehen, welche Aufnahmen 25 durch einen Lagerbügel 19 (vgl. **Fig.2**), der Bestandteil der oberen Baueinheit 1 ist, zu kreiszylindrischen Lager-Aufnahmen 25 geschlossen sind.

Weiterhin sind an jedem (oberen) Längsträger 13, 14 an deren einander zugewandten Innenseiten sowie in Fzg.-Querrichtung Q betrachtet einander gegenüber liegend nach Art eines Hohlzylinders ausgebildete Lagerstellen 17 (jeweils eine Lagerstelle 17 je Längsträger 13, 14 - die innenseitige Lagerstelle 17 im Längsträger 13 ist dabei durch dessen Außenseite verdeckt) vorgesehen, in welche jeweils ein elastisches Lager eingesetzt werden kann, über welche Lager eine (lediglich in den Figuren 4, 5) gezeigte elektromotorische Antriebseinheit 30 für das Fahrzeug im Achsträger 10 gelagert wird bzw. ist. Zwei weitere Lagerstellen 18 sind symmetrisch zur (sich in Fahrtrichtung F in der Mitte des Achsträgers 10 erstreckenden) Längsmittelachse des Achsträgers 10 am vorderen Querträger 11 vorgesehen. Die Zylinderachsen der wie üblich aufgebauten und in die Lagerstellen 17 eingesetzten elastischen Gummilager mit zylindrischen Buchsen und zwischenliegender Elastomerschicht fallen in Fzg.-Querrichtung Q laufend zusammen und die Zylinderachsen der analog aufgebauten Gummilager in den Lagerstellen 18 verlaufen in Fzg.-Längsrichtung (F).

In **Figur 4** ist ein Zwischenschritt bei der automatisierten (Fließband)-Montage eines erfindungsgemäßen Achsträgers 10 dargestellt, so wie dies vor der Figurenbeschreibung bereits beschrieben ist, und in **Fig.5** ist der vollständig komplettierte, d.h. mit Anbauteilen versehene Achsträger 10 gezeigt, so wie er im Rahmen der sog. und dem Fachmann für die Fertigung von Personenkraftwagen bekannten "Hochzeit" mit der Fzg.-Karosserie verschraubt wird. Beim Zusammenbauen und Komplettieren des Achsträgers 10 wird zunächst die untere Achsträger-Baueinheit 2 auf einen in den Figuren nicht dargestellten Werkzeugträger aufgelegt und daraufhin wird die bereits genannte elektromotorische Antriebseinheit 30 auf hierfür am Werkzeugträger vorgesehene Tragböcke aufgesetzt. Im nächsten Montageschritt werden die von der Antriebseinheit 30 wegführenden beidseitigen Abtriebswellen 41 inclusive der Radträger 42 montiert und der Querstabilisator 40, welcher hier eine mittig vorgesehene Verstelleinheit aufweist, in die unteren Aufnahmen 25 der Baueinheit 2 eingesetzt. Der damit erreichte Zwischenstand ist in Fig.4 dargestellt. In darauf folgenden Bearbeitungsstationen wird (zunächst) die obere Baueinheit 1 des Achsträgers 10 auf dessen untere Baueinheit 2 aufgesetzt und es werden diese beiden Baueinheiten 1, 2 an den Verschraubungs-Stellen S miteinander verschraubt, d.h. lösbar verbunden. Danach werden noch die radführenden Lenker 43 montiert. Im Zustand von Fig.5 ist die Lagerung der Antriebseinheit 30 in den (in den beiden Längsträgern 13, 14 der Baueinheit 1) vorgesehenen Lagerstellen 17 noch nicht montiert und daher nicht im Detail sichtbar. Mittels einfacher Lagerbrücken wird dies in einem nächsten Bearbeitungsschritt realisiert.

In **Figuren 6 - 11** wird die Erfindung in einem zweiten Ausführungsbeispiel näher erläutert.

Dabei ist ein Achsträger 10 einer Hinterachse eines Personenkraftwagens aus zwei am besten in **Figur 7** - diese zeigt nur den Achsträger 10 ohne weitere Achs-Bauteile - erkennbaren Baueinheiten, nämlich der ersten Baueinheit 1 und der zweiten Baueinheit 2 zusammengesetzt. Die erste Baueinheit 1, welche wie im Einbauzustand im Fahrzeug oberhalb der zweiten Baueinheit 2 liegt, besteht aus einem in Fahrtrichtung F des mit diesem Achsträger 10 ausgestatteten Fahrzeugs vorderen und in Fahrzeug-Querrichtung Q orientierter Querträger 11 sowie einem weiteren parallel hierzu weiter hinten vorgesehenen Querträger 12, welche beide bspw. als Strangpressprofil ausgebildet und beiderseits endseitig stoffschlüssig und vorzugsweise auch formschlüssig mit jeweils einem im Wesentlichen in Fahrtrichtung F ausgerichteten Längsträger 13 (in Fahrtrichtung betrachtet links liegend) bzw. 14 (in Fahrtrichtung betrachtet rechts liegend) verbunden sind. An den Enden dieser bspw. in Druckguss ausgeführten Längsträger 13, 14 sind Aufnahmen 15 für elastische Lager vorgesehen, über die der Achsträger 10 am Unterboden des (nicht gezeigten) Aufbaus eines Personenkraftwagens lösbar befestigt wird bzw. ist. Die Querträger 11 und 12 sowie die Längsträger 13 und 14 mit den Aufnahmen 15 sind miteinander zusammenhängend Bestandteile der ersten Baueinheit 1.

Die bereits genannte unterhalb der Baueinheit 1 liegende zweite Baueinheit 2 ist mit erstgenannter an mehreren Stellen von unten her verschraubt und ist durch einen vertikal unterhalb in der Nähe des Querträgers 12 liegenden Querträger 22 sowie zwei vertikal im wesentlich direkt unterhalb der Längsträger 13, 14 liegende Längsträger 23, 24 gebildet, welche Längsträger 23, 24 über den Querträger 22 und einen weiteren Querträger 44, der in Fahrtrichtung F vor dem Querträger 22 liegt, als zweite Baueinheit 2 in Form eines in sich zusammenhängenden Druckgussbauteils ausgebildet sind.

Noch in **Fig.7** erkennt man an den Längsträgern 13, 14 jeweils eine sowie am Querträger 11 zwei zur von diesen umschlossenen Innenseite des Achsträgers 10 hin offene Aufnahmen 45 für in diese einzusetzende Lager für eine bspw. in den **Figuren 6****,** **8** **und** **11** dargestellte elektromotorische Antriebseinheit 30 für die Räder der diesen Hinterachsträger 10 aufweisenden HinterAchse des Fahrzeugs. Diese elektromotorische Antriebseinheit 30 besteht aus einer quer, d.h. mit ihrer Rotationsachse in Fzg.-Querrichtung liegend eingebauten Elektromaschine 30a, neben bzw. in Fahrtrichtung F vor dieser liegend ein Getriebe 30b vorgesehen ist, welches ein Differentialgetriebe sowie ein ggf. schaltbares Übersetzungs-Getriebe aufweist. Von diesem Getriebe 30b führen nicht dargestellte Abtriebswellen zu den ebenfalls nicht dargestellten Rädern dieser Fzg.-Achse. Von dieser Antriebseinheit 30 ist in Figur 6 noch ein mit der Bezugsziffer 30c gekennzeichnetes Gehäuse für deren Leistungselektronik dargestellt.

Nun auf die weiteren **Figuren 6****,** **8** - **11** eingehend sind darin die weiteren Komponenten der Achse dargestellt, wobei jeweils der linksseitige Radträger 42 gezeigt ist, an dem in üblicher Weise ein nicht gezeigtes Radlager und an letzterem das Fzg.-Rad befestigt ist. In nur einigen der Figuren dargestellt ist die durch den Rad-Mittelpunkt M (= Radmitte M) verlaufende Drehachse D des Rades. Der Radträger 42 (ist ebenso wie sein rechtsseitiges Pendant) über einen oberen, d.h. oberhalb der Radmitte M am Radträger 42 angelenkten Dreieckslenker 32 sowie zwei untere, d.h. unterhalb Radmitte M angelenkte Querlenker 33, 34 und einen in Fahrtrichtung F betrachtet hinten, d.h. hinter Radmitte M liegenden Spurlenker 35, welche jeweils mit ihrem anderen Ende gelenkig letztlich am Achsträger 10 abgestützt sind, geführt.

Der obere Dreieckslenker 32 ist solchermaßen angeordnet, dass er mittels zweier Gummilager 46, 47 gelenkig am Achsträger 10 angebunden ist, während für die dritte Anbindungsstelle am Radträger 42 ein (nicht sichtbares) Kugelgelenk vorgesehen ist. Wie insbesondere aus **Fig. 9** hervorgeht, ist die Mittelachse 46a des ersten (in einer senkrechten Projektion auf die Fahrbahn sowie in Fahrtrichtung F betrachtet) vor Radmitte M liegenden Gummilagers 46, um welche dieses eine Drehbewegung ohne Verformung des lagerinternen Elastomerelements erlaubt, in dieser Projektion unter einem Winkel in der Größenordnung von 10° bis 20° gegenüber der Fahrzeuglängsachse zur Fahrzeug-Außenseite hin geneigt. Hingegen ist die Mittelachse 47a des zweiten in Fahrtrichtung F betrachtet hinter Radmitte M liegenden Gummilagers 47 in einer solchen senkrechten Projektion auf die Fahrbahn unter einem Winkel in der Größenordnung von 0° bis 10° gegenüber der Fahrzeuglängsachse In Fahrtrichtung F betrachtet zur Fahrzeug-Mittenebene hin gerichtet, und damit bezüglich der Längsachse des Fahrzeugs entgegengesetzt zur Mittelachse 46a des vorderen Gummilagers 46 ausgerichtet.
Der im Hinblick auf eine geringfügige Lenkbarkeit der Fzg.-Hinterräder vorteilhafterweise hinten liegende, d.h. hinter Radmitte M am Radträger 42 angelenkte und von dort nicht nur in Querrichtung Q, sondern auch weiter gegen Fahrtrichtung F nach hinten ausgerichtete Spurlenker 35 führt zu einem Aktuator 3, mit welchem ein gewünschter Spurwinkel am Hinterrad einstellbar ist. Dieser Lenk-Aktuator 3, welcher auch als Lenkgetriebe 3 bezeichnet werden kann, ist mit seinem Gehäuse sowohl mit der oberen Baueinheit 1 als auch mit der unteren Baueinheit 2 des Achsträgers 10 verschraubt, d.h. lösbar fest verbunden. Das Gehäuse des Lenkgetriebes 3 ist dabei ausgelegt, auch Kräfte zwischen den beiden Baueinheiten 1, 2 des Achsträgers 10 übertragen zu können, so dass dieses Gehäuse (des Aktuators 3) bezüglich des Achsträgers 10 auch eine Tragfunktion übernimmt, d.h. den Achsträger 10 als Abstützglied zwischen dessen Baueinheiten 1 und 2 versteift und nicht nur die Reaktionskräfte aus einer Betätigung des Aktuators 3 sowie die Radführungskraft der beiden Spurlenker 35 (des linken und rechten Fzg.-Rades) abstützt. Auf dem wie ersichtlich breit ausgeführten Querlenker 34 kann ein Tragfederelement (für den Fzg.-Aufbau) abgestützt sein, welches vorliegend der Übersichtlichkeit halber nicht dargestellt ist und der zumindest anteilig in Fahrtrichtung F nach vorne gepfeilte untere Querlenker 33 vervollständigt diese hinsichtlich ihres elastokinematischen Verhaltens sehr gut abstimmbare Radführung bzw. Achse, wobei der letztgenannte und nach vorne gepfeilte Querlenker 33 mit seinem dem Radträger 32 abgewandten Ende an der oberen Baueinheit 1 des Achsträgers 10 abgestützt ist, während der andere unterhalb Radmitte M verlaufende breite Querlenker 34 u.a. wegen des auf diesem abgestützten Tragfederelements möglichst weit unten liegend an der unteren zweiten Baueinheit 2 des Achsträgers 10 abgestützt oder angelenkt ist. Nahe dieses Abstütz- oder Anlenkpunktes des Querlenkers 34 an der Baueinheit 2 bzw. an deren Längsträgern 23, 24 verläuft zwischen diesen beiden Längsträgern 23, 24 der vordere Querträger 44, welcher diese Baueinheit 2 in sich signifikant versteift.

Dabei ist neben der bereits genannten Tragfeder ein weiteres Federelement in Form eines üblichen Stabilisators 40 vorgesehen, welcher hier in bekannter Weise geteilt ausgeführt ist und einen Aktuator 37 aufweist, mit welchem die beiden Stabilisatorhälften gegeneinander tordiert werden können, um ein einer Wankbewegung des Fzg.-Aufbaus entgegen zu wirken. Dieser Stabilisator 40 ist in bauraumsparender Weise mit seinem sich in Fzg.-Querrichtung erstreckenden Abschnitt in Fahrtrichtung F betrachtet vorneliegend im Bereich des Querträgers 11 angeordnet und in auf den Längsträgern 13, 14 angebrachten Lagern 38 gelagert. Die seitlichen und wie üblich zumindest annähernd in Fzg.-Längsrichtung abgewinkelten Arme des Stabilisators 40 sind in Fzg.-Querrichtung Q betrachtet relativ weit außen liegend und somit dort, wo die Abmessung des Dreieckslenkers 32 in Fzg.-Längsrichtung relativ gering ist, über den Dreieckslenker 32 hinweg geführt und mit ihren freien Enden über eine Pendelstütze 39 am Radträger 42 abgestützt.

### Bezugszeichen

- 1: Erste (obere) Baueinheit
- 2: Zweite (untere) Baueinheit
- 3: Lenk-Aktuator
- 10: Achsträger
- 11: Vorderer Querträger
- 12: Hinterer Querträger
- 13: Längsträger
- 14: Längsträger
- 15: Aufnahme für elastische Lager
- 16: Anlenklasche
- 17: Lagerstelle
- 18: Lagerstelle
- 19: Lagerbügel
- 22: Querträger
- 23: Längsträger
- 24: Längsträger
- 25: Aufnahme
- 26: Anlenklasche
- 30: Elektromotorische Antriebseinheit
- 30a: Elektromaschine
- 30b: Getriebe
- 30c: Gehäuse
- 32: Dreieckslenker
- 33: Querlenker
- 34: Querlenker
- 35: Spurlenker
- 37: Aktuator
- 38: Lager
- 39: Pendelstütze
- 40: Stabilisator
- 41: Antriebswelle
- 42: Radträger
- 43: Radführende Lenker
- 44: Querträger
- 45: Aufnahme
- 46: Gummilager
- 46a: Mittelachse des Gummilagers
- 47: Gummilager
- 47a: Mittelachse des Gummilagers

## Patentansprüche

1. Kraftfahrzeug mit einem Achsträger, welcher zumindest zwei zumindest annähernd in Fahrzeug-Längsrichtung (F) orientierte Längsträger (13, 14) und zumindest einen diese verbindenden Querträger (11, 12) umfasst, welche eine erste Baueinheit (1) beschreiben und der neben einer zumindest teilweise gelenkigen Abstützung für radführende Lenker zur Aufnahme einer elektromotorischen Antriebseinheit (30) für das Fahrzeug vorgesehen ist, **dadurch gekennzeichnet,**
**dass** zusätzlich zu den die erste Baueinheit (1) bildenden Trägern (11, 12, 13, 14) zwei weitere Längsträger (23, 24) und zumindest ein weiterer diese weiteren Längsträger (23, 24) verbindender Querträger (22) in Form einer zweiten Baueinheit (2) vorgesehen sind, die im Einbauzustand des Achsträgers in einem horizontal stehenden Fahrzeug in Vertikalrichtung betrachtet unterhalb oder oberhalb der ersten Baueinheit (1) liegt und mit der ersten Baueinheit (1) lösbar verbunden ist, wobei an jeder Baueinheit (1, 2) auf jeder Fahrzeug-Seite zumindest einer der mehreren vorgesehenen radführenden Lenker zumindest teilweise gelenkig abgestützt ist.

2. Kraftfahrzeug nach Anspruch 1, wobei die elektromotorische Antriebseinheit (30) über zumindest drei geringfügig elastische Lagerstellen (17, 18) im Achsträger gelagert ist, die durch zylindrische Buchsen mit zwischenliegender Elastomerschicht gebildet sind und wobei die Zylinderachsen der Buchsen für zwei Lagerstellen (17) zumindest annähernd parallel zueinander verlaufen und die Zylinderachse der dritten Lagerstelle (18) in einer vertikalen Projektion zumindest näherungsweise senkrecht zu den Achsen der erstgenannten Lagerstellen (17) verläuft.

3. Kraftfahrzeug nach Anspruch 2, wobei der dritten Lagerstelle (18) eine vierte Lagerstelle (18) funktional parallel geschaltet ist.

4. Kraftfahrzeug nach Anspruch 3, wobei an einem in Fahrzeug-Fahrtrichtung (F) vorderen Querträger (11) der ersten Baueinheit (1) zwei der Lagerstellen (18) der elektromotorischen Antriebseinheit (30) und an den beiden Längsträgen (13, 14) dieser ersten Baueinheit (1) jeweils eine Lagerstelle (17) vorgesehen ist, deren Zylinderachsen zusammen fallen.

5. Kraftfahrzeug nach einem der vorangegangenen Ansprüche, wobei die erste Baueinheit (1) aus die Längsträger (13, 14) bildenden Guss-Seitenteilen und zwei in Form von Strangpressprofilen ausgebildeten Querträgern (11, 12) zusammengesetzt ist, während die zweite Baueinheit (2) ein Druckgussbauteil ist.

6. Kraftfahrzeug nach einem der vorangegangenen Ansprüche, wobei in der zweiten Baueinheit Aufnahmen (25) für einen Querstabilisator vorgesehen sind.

7. Kraftfahrzeug nach einem der Ansprüche 1 - 5, wobei an der ersten Baueinheit (1) des Achsträgers (10), welche oberhalb dessen zweiter Baueinheit (2) angeordnet ist, jeweils ein mit einem Radträger (31) verbundener Dreieckslenker (32) abgestützt ist.

8. Kraftfahrzeug nach Anspruch 7, wobei ein Stabilisator (40) an der oberen Baueinheit (1) gelagert ist, dessen Arme über den Dreieckslenker (32) hinweg in der Nähe des jeweiligen Radträgers (42) geführt sind.

9. Kraftfahrzeug nach Anspruch 7 oder 8, wobei ein Lenkgetriebe mit mittragendem Gehäuse oder alternativ ein dessen Tragfunktion übernehmendes Verstrebungsteil im hinteren Bereich des Achsträgers (10) an der oberen und an der unteren Baueinheit (1, 2) befestigt ist, während der geteilt ausgebildete Stabilisator (40), dessen Hälften mittels eines Aktuators (37) gegeneinander tordierbar sind, im vorderen Bereich des Achsträgers (10) angeordnet ist.

10. Kraftfahrzeug nach einem der Ansprüche 7 - 9, wobei der Dreieckslenker (32) mittels zweier Gummilager (46, 47) am Achsträger (10) angelenkt ist, von denen eines in einer senkrechten Projektion auf die Fahrbahn vor und das andere hinter Radmitte (M) liegt und wobei Mittelachse (46a, 47a) zumindest eines der Gummilager (46, 47) in dieser Projektion unter einem Winkel im Bereich zwischen 0° und 20° gegenüber der Fahrzeuglängsachse (F) geneigt ist, wobei in Fahrtrichtung (F) betrachtet die Mittelachse (46a) des vorderen Gummilagers (46) um einen größeren Winkelbetrag zur Fahrzeug-Außenseite hin weist als die gegebenenfalls zur Fahrzeug-Mittenebene hin gerichtete Mittelachse (47a) des hinteren Gummilagers (47).

11. Kraftfahrzeug nach einem der Ansprüche 7 - 10, wobei eine in Fzg.-Querrichtung (Q) verlaufende Querbrücke (44) der unteren zweiten Baueinheit (2) zwischen einem in Vertikalrichtung (H) betrachtet untersten Teilbereich eines mit seiner Rotationsachse in Fzg.-Querrichtung verbauten Elektromotors (30a) der Antriebseinheit (30) und einem in Fahrtrichtung (F) betrachtet neben diesem angeordneten Getriebe (30b) der Antriebseinheit (30), von welchem Abtriebswellen zu den Rädern des Fahrzeugs führen, verläuft.

12. Kraftfahrzeug nach einem der Ansprüche 7 - 11, wobei an zwei Längsträgern (13, 14) der oberen Achsträger-Baueinheit (1) je eine Lagerstelle (45) für das Antriebsaggregat (30) vorgesehen ist und an einem diese Längsträger (13, 14) verbindenden Querträger (11) der oberen Achsträger-Baueinheit (1) zwei Lagerstellen (45) für das Antriebsaggregat (30) vorgesehen sind.

## Claims

1. A motor vehicle having an axle carrier which comprises at least two longitudinal members (13, 14) oriented at least approximately in the vehicle longitudinal direction (F) and at least one crossmember (11, 12) connecting said longitudinal members, which longitudinal members and crossmember describe a first structural unit (1), and which axle carrier, in addition to an at least partially articulated support for wheel-guiding links, is provided for receiving an electric motor drive unit (30) for the vehicle,
**characterised in that**
in addition to the members (11, 12, 13, 14) forming the first structural unit (1), two further longitudinal members (23, 24) and at least one further crossmember (22) connecting these further longitudinal members (23, 24) are provided in the form of a second structural unit (2), which, in the installed state of the axle carrier, is located below or above the first structural unit (1) as considered in the vertical direction, in a vehicle standing horizontally, and is connected releasably to the first structural unit (1), wherein at least one of the plurality of wheel-guiding links provided is supported in an at least partially articulated manner on each structural unit (1, 2) on each side of the vehicle.

2. A motor vehicle according to claim 1, wherein the electric motor drive unit (30) is mounted in the axle carrier by means of at least three slightly resilient bearing positions (17, 18) in the axle carrier which are formed by cylindrical bushings with intermediate elastomer layer, and wherein the cylinder axes of the bushings for two bearing positions (17) run at least approximately parallel to one another, and the cylinder axis of the third bearing position (18) in a vertical projection runs at least approximately perpendicular to the axes of the first-mentioned bearing positions (17).

3. A motor vehicle according to claim 2, wherein a fourth bearing position (18) is functionally connected in parallel with the third bearing position (18).

4. A motor vehicle according to claim 3, wherein two of the bearing positions (18) of the electric motor drive unit (30) are provided on a crossmember (11) of the first structural unit (1) arranged to the front in the direction of travel (F) of the vehicle and a bearing position (17) is provided on each of the two longitudinal members (13, 14) of this first structural unit (1), and the cylinder axes of said bearing positions are coincident.

5. A motor vehicle according to any one of the preceding claims, wherein the first structural unit (1) is composed of cast side parts forming the longitudinal members (13, 14) and two crossmembers (11, 12) configured in the form of extruded profiles, whereas the second structural unit (2) is a die-cast component.

6. A motor vehicle according to any one of the preceding claims, wherein receptacles (25) for an anti-roll bar are provided in the second structural unit.

7. A motor vehicle according to any one of claims 1-5, wherein wishbones (32) connected one to each wheel carrier (31) are supported on the first structural unit (1) of the axle carrier (10), which is arranged above the second structural unit (2) of the axle carrier.

8. A motor vehicle according to claim 7, wherein a stabiliser (40) is mounted on the upper structural unit (1), the arms of said stabiliser being guided over the wishbone (32) in the vicinity of the relevant wheel carrier (42).

9. A motor vehicle according to claim 7 or 8, wherein a steering gear with supporting housing or alternatively a bracing part taking on the function of supporting the steering gear is fastened in the rear region of the axle carrier (10) to the upper and the lower structural unit (1, 2), whereas the divided stabiliser (40), the two halves of which can be twisted relative to one another by means of an actuator (37), is arranged in the front region of the axle carrier (10).

10. A motor vehicle according to any one of claims 7-9, wherein the wishbone (32) is articulated to the axle carrier (10) by means of two rubber bearings (46, 47), one of which lies in front of the wheel centre (M) and the other of which lies behind the wheel centre (M) in a perpendicular projection onto the roadway, and wherein the central axis (46a, 47a) of at least one of the rubber bearings (46, 47) in this projection lies at an angle ranging from 0° to 20° relative to the vehicle longitudinal axis (F), wherein, as considered in the direction of travel (F), the central axis (46a) of the front rubber bearing (46) points toward the vehicle outer side by a greater angle than the central axis (47a) of the rear rubber bearing (47) directed towards the central plane of the vehicle as necessary.

11. A motor vehicle according to any one of claims 7-10, wherein a cross beam (44) of the lower second structural unit (2), said cross beam running in the vehicle transverse direction (Q), runs between a lowermost sub-region, as considered in the vertical direction (H), of an electric motor (30a) of the drive unit (30) installed with its axis of rotation in the vehicle transverse direction and a transmission (30b) of the drive unit (30) arranged adjacently thereto as considered in the direction of travel (F), with output shafts leading from the transmission to the wheels of the vehicle.

12. A motor vehicle according to any one of claims 7-11, wherein a bearing position (45) for the drive assembly (30) is provided on each of two longitudinal members (13, 14) of the upper axle carrier structural unit (1) and two bearing positions (45) for the drive assembly (30) are provided on a crossmember (11) of the upper axle carrier structural unit (1) connecting these longitudinal members (13, 14).

## Revendications

1. Véhicule comprenant un support d'essieu qui comporte au moins deux longerons (13, 14) orientés au moins essentiellement dans la direction longitudinale (F) du véhicule et au moins une traverse (11, 12) reliant ces longerons, qui définissent une première unité (1), et qui est prévu en plus d'un support au moins partiellement articulé de bras de suspension de guidage de roue, pour la réception d'une unité d'entraînement (30) électro motorisée du véhicule,
**caractérisé en ce qu'**
en plus des bras de support (11, 12, 13, 14) formant la première unité (1), il est prévu deux autres longerons (23, 24) et au moins une autre traverse (22) reliant ces autres longerons (23, 24) sous la forme d'une seconde unité (2), qui, a l'état monté du support d'essieu, est située dans la direction verticale d'un véhicule positionné horizontalement au-dessus ou au-dessous de la première unité (1), et est reliée de façon amovible à la première unité (1), sur chaque unité (1, 2), sur chaque côté du véhicule, s'appuyant, en étant au moins partiellement articulé au moins l'un des bras de suspension de guidage de roue.

2. Véhicule conforme à la revendication 1,
dans lequel l'unité d'entraînement électro motorisée (30) est montée sur le support d'essieu par l'intermédiaire d'au moins deux points d'appui (17, 18) faiblement élastiques, qui sont formés par des douilles cylindriques avec une couche élastomère interposée, les axes des douilles cylindriques de deux points d'appui (17) s'étendent au moins approximativement parallèlement l'un à l'autre, et l'axe du troisième point d'appui (18) s'étend en projection verticale au moins approximativement perpendiculairement aux axes des premiers points d'appui (17) susmen tionnés.

3. Véhicule conforme à la revendication 2,
dans lequel un quatrième point d'appui (18) est monté fonctionnellement parallèlement au troisième point d'appui (18).

4. Véhicule conforme à la revendication 3,
dans lequel, sur une traverse avant (11) dans la direction de déplacement (F) du véhicule de la première unité (1) il est prévu deux des points d'appui (18) de l'unité d'entraînement électro motorisée (30), et sur les deux longerons (13, 14) de cette première unité (1) il est respectivement prévu un point d'appui (17) dont les axes coïncident.

5. Véhicule conforme à l'une des revendications précédentes,
dans lequel la première unité (1) est constituée par l'assemblage de pièces latérales coulées formant les longerons (13, 14) et de deux traverses (11, 12) réalisées sous la forme de profilés extrudés alors que la seconde unité (2) est un élément coulé sous pression.

6. Véhicule conforme à l'une des revendications précédentes,
dans lequel dans la seconde unité il est prévu des logements (25) de réception d'un élément de stabilisation transversale.

7. Véhicule conforme à l'une des revendications 1 à 5,
dans lequel sur la première unité (1) du support d'essieu (10) qui est située au-dessus de sa seconde unité (2) de celui-ci s'appuie respectivement une biellette triangulaire (32) reliée à un support de roue (31).

8. Véhicule conforme à la revendication 7,
dans lequel sur l'unité supérieure (1) est montée un stabilisateur (40), dont les bras sont guidés par l'intermédiaire de la biellette triangulaire (32) à proximité du support de roue (42) respectif.

9. Véhicule conforme à la revendication 7 ou 8,
dans lequel un mécanisme de direction avec un boîtier porteur ou en variante un élément d'entrecroisement assurant sa fonction de support est fixé dans la zone arrière du support d'essieu (10) sur l'unité supérieure et sur l'unité inférieure (1, 2), alors que le stabilisateur (40) qui est subdivisé, et dont les moitiés peuvent être soumises à une torsion l'une par rapport à l'autre au moyen d'un actionneur (37) est situé dans la zone avant du support d'essieu (10).

10. Véhicule conforme à l'une des revendications 7 à 9,
dans lequel la biellette triangulaire (32) est articulée sur le support d'essieu (10), au moyen de deux paliers en caoutchouc (46, 47) dont l'un est situé en projection verticale sur la chaussée à l'avant du centre (M) de la roue tandis que l'autre est situé à l'arrière de celui-ci, l'axe médian (46a, 47a) d'au moins l'un des paliers en caoutchouc (46, 47) est incliné dans cette projection d'un angle situé dans la plage comprise entre 0° et 20° par rapport à l'axe longitudinal (F) du véhicule, et dans la direction de déplacement (F) l'axe médian (46a) du palier en caoutchouc avant (46) définit une plus grande valeur angulaire par rapport au côté externe du véhicule que l'axe médian (47a) du palier en caoutchouc arrière orienté le cas échéant vers le plan médian du véhicule (47).

11. Véhicule conforme à l'une des revendications 7 à 10,
dans lequel un pont transversal (44) s'étendant dans la direction transversale (Q) du véhicule de la seconde unité (2) inférieure s'étend entre la zone partielle la plus basse considérée dans la direction verticale (H) d'un moteur électrique (30a) de l'unité d'entraînement (30) dont l'axe de rotation est monté dans la direction transversale du véhicule, et une transmission (30b) de l'unité d'entraînement (30) installée à proximité de celui-ci dans la direction de déplacement (F), dont les arbres de sortie conduisent aux roues du véhicule.

12. Véhicule conforme à l'une des revendications 7 à 11,
dans lequel il est respectivement prévu sur deux longerons (13, 14) de l'unité supérieure (1) un point d'appui (45) pour l'ensemble d'entraînement (30), et il est prévu sur une traverse (11) reliant ces longerons (13, 14) de l'unité supérieure (1) deux points d'appui (45) pour l'ensemble d'entraînement (30).
